Europäisches Patentamt

European Patent Office

Office européen des brevets

(11) Publication number: 0 314 382 A2

## (12) EUROPEAN PATENT APPLICATION

(21) Application number: 88309810.5

(22) Date of filing: 19.10.88

(51) Int. Cl.⁴: F16H 3/08

(30) Priority: 28.10.87 US 114181

(43) Date of publication of application:
03.05.89 Bulletin 89/18

(84) Designated Contracting States:
DE ES FR GB IT SE

(71) Applicant: Borg-Warner Automotive, Inc.
3001 W. Big Beaver Road
Troy Michigan 48084(US)

(72) Inventor: Johnson, Charles Ellis, Jr.
2712 W Twickingham
Muncie Indiana 47304(US)

(74) Representative: Williams, Trevor John et al
J.A. KEMP & CO. 14 South Square Gray's Inn
London WC1R 5EU(GB)

(54) Six speed manual transmission.

(57) A manual transmission (10) capable of producing six forward speed drive ratios including at least two different overdrive speed ratios. The transmission includes an input shaft (14) adapted to continuously drive a cluster gear assembly (26). Moreover, the input gear (22) may be selectively coupled directly to an output shaft (16) to provide for direct drive. The continuously driven cluster gear (26) may be selectively coupled to the output shaft (16) through any one of five other gear meshes (36,42,48,54,60). Two of those five other gear meshs include a pair of relatively large speed gears (58,64) arranged to freely rotate on the countershaft (28) of the cluster gear assembly (26) when the transmission is not engaged in either overspeed drive ratio. As such, these gears do not affect the rotational inertia of the cluster gear assembly (26) and reduces the rotational inertia of the input shaft (14). A reverse drive can be effected by coupling a gear (68) on the cluster gear assembly (26) through a reverse idler gear (72) to the output shaft (16).

FIG. I

## SIX SPEED MANUAL TRANSMISSION

This invention generally relates to transmissions and, more particularly, to a single cluster gear manual transmission capable of developing six different forward speed ratios and having a constant mesh reverse.

In low power to weight vehicles, multi-gear ratio manual transmissions are generally employed to provide the range of output torques needed for efficient vehicle operation. USP3,916,712 to D. Kelbel et al, issued on November 4, 1975, discloses a unique five-speed manual transmission. That transmission included an input shaft which could be coupled directly to the output shaft to provide direct drive in the fourth four-speed drive ratio. The Kelbel et al device further included a continuously driven countershaft assembly driven by an input gear which could be coupled selectively with an output shaft through four separate gear sets to provide first, second, third, and fifth forward drive gear ratios, with fifth being overdrive. A reverse ratio is provided in the Kelbel et al device by coupling the countershaft assembly through a reverse gear to the output shaft. In the Kelbel et al device, the fifth forward speed ratio was effected by having a relatively large gear arranged on the countershaft intermeshing with a smaller gear on the output shaft. By having a relatively large gear rotate with the countershaft, the rotating inertia of the countershaft and cluster gear arrangement is dramatically increased.

There was no mention or disclosure in the Kelbel et al patent of a sixth forward speed drive ratio for developing another overdrive condition or ratio. Moreover, the Kelbel et al device fails to address the effective rotational inertia problems, gear rattle problems, or the increased shift effort that would be created by adding both a fifth and sixth overdrive gear to the countershaft and cluster gear assembly.

In view of the above, and in accordance with the present invention, there is provided a manual transmission which provides six forward drive speed ratios. Two of the six forward drive speed ratios impart an overdrive condition to the output shaft of the transmission. To effect these ends, the countershaft and cluster gear assembly of the present invention were redesigned from that previously known. The improved cluster gear assembly, which is the subject of the present invention, reduces the effective rotational inertia of the transmission input shaft whereby effecting a reduction in the tendency for gear rattle and reduces the shift effort required by the operator to effect an underdrive or direct drive condition.

In a preferred form of the invention, and as fully described herein, the transmission includes an input shaft arranged to continuously drive the cluster gear assembly. Moreover, the input gear may be selectively coupled directly to an output shaft to provide for direct drive in the fourth forward speed drive ratio. The continuously driven cluster gear assembly of the instant invention may be selectively coupled to the output shaft through any one of five other gear meshes or sets to provide, overall, a first through sixth forward speed drive ratio mechanism; with fifth and sixth gears both being overdrive conditions. A reverse drive can be effected by coupling a gear on the countershaft assembly through a reverse idler gear to the output shaft.

To provide two overdrive gear ratios, a pair of relatively large speed gears were arranged on the cluster gear assembly. Rather than affixing such gears to the countershaft, as taught by the prior art, the present invention teaches to uniquely affix the synchronizer means for engaging such gears to the countershaft and to allow such overdrive gears to freely rotate on the countershaft when the transmission is not engaged in either overspeed drive ratio. As such, these oversized gears do not affect the rotational inertia of the countershaft assembly. This location for the fifth-sixth synchronized gear ratio reduces the rotational inertia of the input shaft which reduces the tendency for gear rattle and reduces the necessary shift effort for engaging an underdrive or direct drive speed ratio.

Accordingly, a primary object of this invention is the provision of a six speed manual transmission including at least two overspeed drive ratios.

Another object of this invention is the provision of a six speed manual transmission having a unique and improved cluster gear assembly which reduces the effective rotational inertia of the transmission input shaft thereby reducing gear rattle tendencies and effort required to shift in an underdrive or direct drive condition.

Having in mind the above objects and other attendant advantages that would be evident from an understanding of this disclosure, the invention comprises the devices, combinations and arrangements of parts as illustrated in the presently preferred form of the invention which is hereinafter set forth in detail to enable those skilled in the art to readily understand the function, operation, construction and advantages of same when read in conjunction with the accompanying drawings in which:

Figure 1 is a longitudinal sectional view of a six speed transmission incorporating the teachings of the present invention;

Figure 2 is a sectional view taken along line 2-2 of Figure 1; and

Figure 3 is a diagramatic view showing the shift pattern established according to this invention.

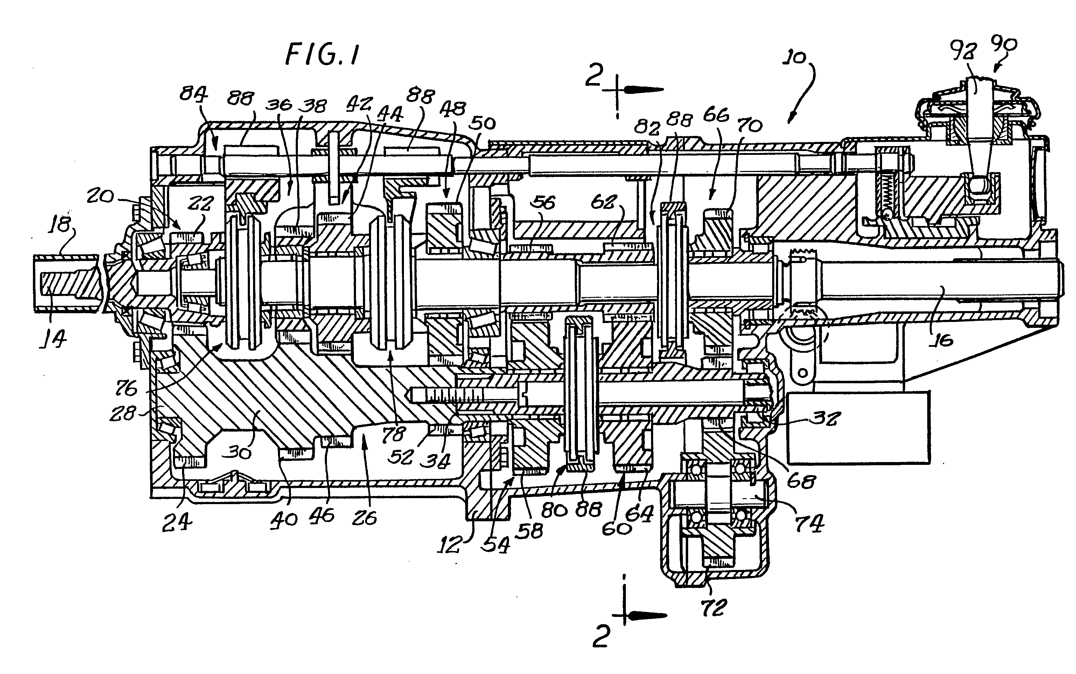

Referring now to the drawings, wherein like reference numerals indicate like parts throughout the several views, and more particularly to Figure 1, wherein there is illustrated a six speed, fully synchronized manual transmission 10. The transmission 10 includes a multiple piece housing 12 having coaxially arranged input and output shafts 14, 16 respectively. Both shafts 14 and 16 are supported for rotation in the housing 12 and extend therebeyond. Suitable sealant means may be provided at those locations where the shafts extend beyond the housing. Input shaft 14 is adapted to receive power from an associated engine (not shown). A sleeve 18 may be coaxially arranged along and about the axial length of the input shaft 14 to provide support for the clutch release bearing and its associated mechanism.

Arranged on and about the shafts 14 and 16 are a series of coaxially spaced output gears defining parts of the first, second, third, fourth, fifth, sixth and reverse gear meshes. The first gear mesh or set 20 includes an input drive gear 22 and an intermeshing gear 24 provided on a cluster gear assembly 26. Cluster gear assembly 26 includes a countershaft 28 journalled for rotation in housing 12. For ease of manufacturing and assembly, countershaft 28 may comprise a first shaft section 30 and a second shaft section 32 joined thereto through a spline 34. The input drive gear 22 is rotatable with input shaft 14. For purposes of this description, the term "rotatable with" is meant to include any type of connection which causes rotary movement of one element to be imparted to rotary movement of another element with no relative rotation therebetween. Likewise, the intermeshing gear 24 is fixedly secure to countershaft 28. By such construction, a continuous drive is established between input shaft 14 and cluster gear assembly 26.

The second gear mesh or set 36 includes a third ratio output gear 38 and an intermeshing third ratio input gear 40. Output gear 38 is rotatably arranged on the output shaft 16 while input gear 40 is fixedly provided on countershaft 28.

The third gear mesh or set 42 includes a second ratio output gear 44 and an intermeshing second ratio input gear 46. Output gear 44 is rotatably arranged on output shaft 16 while input 46 in fixedly provided on countershaft 28.

The fourth gear mesh or set 48 includes a first ratio output gear 50 and an intermeshing first ratio input gear 52. Output gear 50 is rotatably arranged on output shaft 16 while input gear 52 is fixedly provided on countershaft 30.

The fifth gear mesh or set 54 includes a sixth ratio output gear 56 with an intermeshing sixth ratio input gear 58. Output gear 56 is rotatable with output shaft 16 while input gear 58 is rotatable on countershaft 30.

The sixth gear mesh or set 60 includes a fifth ratio output gear 62 and an intermeshing fifth ratio input gear 64. Output gear 62 is rotatable with output shaft 16 while input gear 64 is rotatable on countershaft 30.

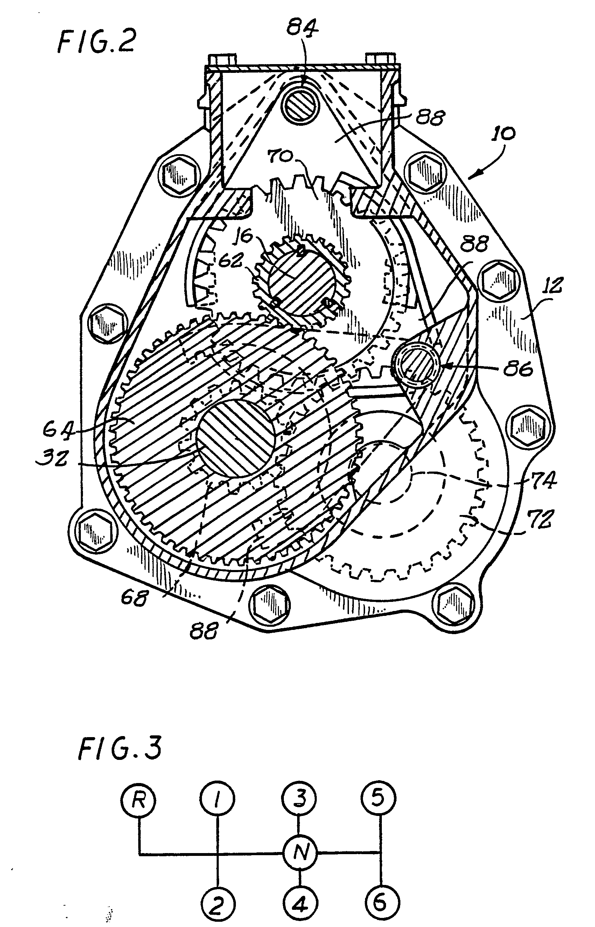

The reverse gear mesh or set 66 includes a reverse input gear 68 which drives a reverse output gear 70 through an intermediate or reverse idler gear 72. As may be best illustrated in Figure 2, the input gear 68 rotates with the second shaft section 32 of countershaft 28 and drives the idler gear 72 rotatably supported by a reverse countershaft or idler shaft 74. Countershaft 74 may be carried by housing 12. The reverse idler gear 72, in turn, drives the reverse output gear 70 which is rotatable on the output shaft 16.

Returning to Figure 1, a three-four ratio synchronizing clutch mechanism or means 76 is disposed or located between said first and second gear meshes 20, 36, respectively, for permitting selective engagement of a third or fourth gear ratio. As is known in the art, the synchronizing clutch mechanism or means is adapted to selective couple the input gear 22 to the output shaft 16 to provide a direct drive ratio. A first-second ratio synchronizing clutch mechanism or means 78 is disposed or located between said third and fourth gear meshes 42, 48 respectively, for permitting selective engagement of either a first or a second gear ratio. A fifth-sixth ratio synchronizing clutch mechanism or means 80 is disposed or located between said fifth and sixth gear meshes 54, 60, respectively, for permitting selective engagement of either a fifth or sixth drive ratio. Similarly, a reverse synchronizer clutch mechanism or means 82 is disposed or located about the output shaft 16 and adjacent the reverse output gear 70 for permitting selective engagement of a reverse gear ratio. Synchronizing clutch mechanisms 76, 78, 80 and 82 may be of the type disclosed in White et al USP.2,221,900, issued November 19, 1940.

It is important to note, however, that the fifth-sixth synchronizer 80 is located on the cluster gear assembly 26 about the countershaft 28. This location for the sixth-fifth synchronizer reduces the effective rotational inertia of the transmission input shaft whereby reducing the tendency for gear rattle and, further, reduces the shift effort required to engage a first, second, third, or fourth forward speed drive ratio. That is, since both the fifth and sixth input gears 58, 64, respectively, freely turn or rotate on the countershaft 28, they do not effect the rotating inertia of the cluster gear assembly 26.

Since the fifth and sixth input gears 58, 64, respectively, have a larger gear diameter than the other gears defining the cluster gear assembly, the inertia of a cluster gear assembly having these input gears fixedly connected thereto or an integral part thereof would have three times the inertia effect of a cluster gear assembly which does not have the input gears as an integral part thereof.

This improved transmission has a convenient shift pattern as shown diagramatically in Figure 3. This patterns involves an extreme leftward reverse position, a leftward first-second position, a central third-fourth position, and a rightward fifth-sixth position as viewed from the operators' station. To achieve this pattern, it was necessary to arrange the various gear meshes or sets as shown in Figure 1. The pattern is accomplished by providing that: synchronizer means 76 move forwardly to establish a fourth forward gear ratio and rearwardly to establish a third forward gear drive ratio; synchronizer means 78 when moved forwardly establishes a second forward drive ratio and when moved rearwardly establishes a first gear drive ratio; synchronizer means 80 when moved forwardly establishes a sixth forward drive gear ratio and when moved rearwardly establishes a fifth forward gear drive ratio; and, synchronizer means 82 when moved rearwardly establishes a reverse gear mesh.

To achieve the pattern within a very compact transmission housing, two shift rail assemblies 84 and 86 (Fig. 2) are provided with each rail assembly having one or more shift forks 88 arranged thereon. The shift rail assemblies 84 and 86 may be of the type disclosed in Kelbel et al USP.3,916,718 issued November 4, 1975. Suffice it to say, the shift forks 88 are arranged in a conventional manner with the synchronizer means 76, 78, 80 and 82.

Operator controlled manual shift means 90 may be supported by the housing 12. Suffice it to say, the manual shift mechanism or means 90 includes a control stick 92 one end of which extends upwardly for operator access thereto. The opposite end of stick 92 controls the rotational and longitudinal disposition of the shift rail assembly 84 and the longitudinal disposition of shift rail assembly 86. That is, lateral movement of control lever or stick 92 from one side of the neutral position (Figure 3) to the other side of the neutral position results in corresponding rotation of the shift rail assembly 84 depending on the direction of sidewise movement of the control lever 92. In a known manner, rotation of the shift rail assembly 84 causes a protruding member or finger thereon to be rotated into alignment with another member of the shift rail assembly 84 or with a member of shift rail assembly 86. The control stick 92 is then moved longitudinally in the desired direction to engage the particular synchronizing means for effecting any one of the six different forward speed drive ratios or the reverse gear mesh.

Thus, there has been provided a SIX SPEED MANUAL TRANSMISSION, which fully satisfies the objects, aims and advantages set forth above. While the invention has been described in connection with a specific embodiment thereof, it is evident that many alternatives, modifications and variations will be apparent to those skilled in the art in light of the foregoing description. Accordingly, it is intended to embrace all such alternatives, modifications, and variations as fall within the spirit and broad scope of the appended claims.

## Claims

1. A multigear ratio transmission (10) conditionable to establish at least six different forward speed drive ratios, comprising:
an input shaft (14);
an output shaft (16);
first, second, third, fourth, fifth and sixth selectively engageable gear meshes (20,36,42,48,54,60) each capable of developing a different speed ratio at the output shaft when said input shaft is driven;
said first gear mesh (20) including a gear (22) rotatable with said input shaft (14) and an intermeshing gear (24) provided on a countershaft (28);
said second, third and fourth gear meshes (36,42,48) each including a gear (38,44,50) rotatable on said output shaft (16) and an intermeshing gear (40,46,52) fixedly provided on said countershaft(28); and
said fifth and sixth gear meshes (54,60) each including a gear (56,62) rotatable with said output shaft (16) and an intermeshing gear (58,64) rotatable on said countershaft (28).

2. The multiratio transmission of Claim 1 further including individually actuatable synchronizer means (76,78,80) disposed between said first and second (28,36), said third and fourth (42,48), and said fifth and sixth gear meshes (54,60) for permitting selective engagement of any one of said gear meshes.

3. The multiratio transmission of Claim 2 wherein said synchronizer means (80) disposed between said fifth and sixth gear meshes (54,60) is disposed about said countershaft (28).

4. The multiratio transmission of Claim 2 wherein some of said synchronizer means are actuatable by a first shift rail assembly (84) while other synchronizer means are actuatable from a second shift rail assembly (86).

5. The multiratio transmission of Claim 1 wherein selective engagement of either said fifth or sixth gear mesh (54,60) imparts an overdrive condition to said output shaft (16).

6. A transmission (10) comprising:
a housing (12);
in put and output shafts (14,1 6) rotatably supported by said housing;
first (20), second (36), third (42), fourth (48), fifth (54), sixth (60), and reverse ( 6 6) selectively engageable gear meshes for developing at least six different forward and one reverse speed ratio at the output shaft (16) when said input shaft (14) is driven;
said first gear mesh (20) including a gear (22) rotatable with said input shaft (14) and an intermeshing gear (24) provided on a countershaft (28);
said second, third and fourth gear meshes (36,42,48) each including a gear (38,44,50) rotatable on said output shaft (16) and an intermeshing gear (40,46,52) fixedly provided on said countershaft (28);
said fifth and sixth gear meshes (54,60) each including a gear (56,62) rotatable with said output shaft (16) and an intermeshing gear (58,64) rotatable on said countershaft (28); and
said reverse gear mesh (66) including a gear (70) rotatable on said output shaft (16) and intermeshable with an idler gear (72) rotatably supported by said housing, said idler gear intermeshing with another gear (68) rotatable with said countershaft (28).

7. The transmission according to Claim 6 further including individually actuatable synchronizer means (76,78,80,82) disposed between said first and second, said third and fourth said fifth and sixth, and adjacent the reverse gear rotatable on said output shaft for permitting selective engagement of any one of said gear meshes.

8. The transmission according to Claim 7 wherein the synchronizer means (80) disposed between said fifth and six gear meshes is disposed about said countershaft (28).

9. The transmission according to Claim 7 wherein the synchronizer means (82) disposed adjacent the reverse gear (70) is disposed about said output shaft (16).

10. The transmission according to Claim 7 wherein same of said synchronizer means are actuatable by a first shift rail assembly (84) while other synchronizer means are actuatable from a second shift rail assembly (86).

11. The transmission according to Claim 6 wherein selective engagement of either said fifth or sixth gear mesh (54,60) imparts an overdrive condition to said output shaft (16).

12. A multiratio transmission (10) comprising:
a housing (12);
input and output shafts (14,16) rotatably supported by said housing;
first (20), second (36), third (42), fourth (48), fifth (5 4) and reverse (66) selectively engageable gear meshes for developing a plurality of different speed ratios including at least one overdrive ratio at the output shaft (16) when the input shaft (14) is driven;
said first gear mesh (20) including a gear (22) rotatable with said input shaft (14) and an intermeshing gear (24) provided on a countershaft (28);
said second, third and fourth gear meshes (36,42,48) each including a gear (38,44,50) rotatable on said output shaft (16) and an intermeshing gear (40,46,52) fixedly provided on said countershaft (28);
said fifth gear mesh (54) including (56) a gear rotatable with said output shaft (16) and an intermeshing gear (58) rotatably arranged on said countershaft (28), said fifth gear mesh being effective when engaged to impact an overdrive ratio to said output shaft when said input shaft is driven; and
said reverse gear mesh (66) including a gear (70) rotatable on said output shaft and intermeshable with an idler gear (72) rotatably supported by said housing (12), said idler gear intermeshing with another gear (68) rotatable with said countershaft.

FIG.1

FIG.2

FIG.3

R   1   3   5

N

2   4   6